# EUROPÄISCHE PATENTANMELDUNG

(11) **EP 1 317 032 A2**
(43) Veröffentlichungstag der Anmeldung: **04.06.2003**
(21) Anmeldenummer: 02024262.4
(22) Anmeldetag: 31.10.2002
(51) Int. Cl.: H01S 3/094, H01S 3/30

(54) **Pumpquelle mit mehreren Pumplasern zur Raman-Verstärkung eines WDM-Signals mit minimierter Vierwellenmischung**

(30) Priorität: 31.10.2001 DE 10153744
(71) Anmelder: SIEMENS AKTIENGESELLSCHAFT, 80333 München (DE)
(72) Erfinder: Krummich, Peter, Dr., 81379 München (DE)

(57) **Zusammenfassung**

Eine Pumpquelle zur Raman-Verstärkung eines optischen Wellenlängen-Multiplex- (WDM) -Signals (S) weist mehrere Pumplaser (PL₁,...,PLₘ) mit jeweils unterschiedlichen Pumpwellenlängen (λ₁, ... , λₘ) auf. An die Pumplaser (PL₁, ..., PLₘ) sind Module (M₁,...,Mₘ) zur Winkel- oder/und Amplitudenmodulation von Pumpsignalen (PS₁,..,PSₘ) der Pumplaser (PL₁,...,PLₘ) angeschlossen. Durch eine entsprechende Anpassung der Modulation der Pumpsignale (PS₁,...,PSₘ) werden Mischprodukte aus einer Vierwellenmischung zwischen den Pumpsignalen (PS₁,...,PSₘ) unterdrückt.

## Beschreibung

Die Erfindung betrifft eine Pumpquelle nach dem Oberbegrirt des Patentanspruchs 1.

Für die Übertragung eines optischen WDM-Signals entlang langer Faserstrecken sind optische Verstärkermodule nach jeweiligen Übertragungsabschnitten erforderlich. Eine wirkungsvolle Methode zur zusätzlichen Verstärkung eines Signals beruht auf stimulierter Raman-Streuung, bei der ein Pumpsignal in die Übertragungsfaser eingespeist wird. Das Pumpsignal kann dabei mittels mehrerer Pumpquellen, meistens Laserdioden, erzeugt werden.

Der Wellenlängensatz der Pumpquellen wird so gewählt, daß alle Kanäle des WDM-Signals meistens im C- und L-Band (von ca. 1525 nm bis ca 1610 nm) unter Betrachtung des Raman-Gewinn-Spektrums (s. "Fiber Optic Communication Systems", G.P. Agrawal, 2. edition, p.381, fig.8.11) möglichst gleich verstärkt werden. Ein Kanal mit einer Frequenzverschiebung von 13,2 THz zu einer Pumpfrequenz wird maximal verstärkt. Liegt eine kleinere oder größere Frequenzdifferenz zwischen einem Kanal und einem Pumpsignal vor, so wird der Kanal weniger verstärkt. Durch Verwendung einer größeren Anzahl von unterschiedlichen Pumpwellenlängen werden alle Kanäle des WDM-Übertragungssignalen homogener verstärkt. Dadurch wird ein flaches Raman-Gewinnspektrum aller Kanalpegel erreicht. Ein solcher Raman-Verstärker ist beispielweise in der älteren Patenanmeldung mit dem Aktenzeichen P 10048460.3 beschrieben.

Zum Multiplexen der unterschiedlichen Pumpwellenlängen werden oft Mach-Zender-Interferometer verwendet, die einen Betrieb für eingekoppelte Leistungen bis z. B. 2 W erlauben. Dies erfordert ein Pumpwellenlängenraster mit zueinander äquidistanten Pumpwellenlängen. Eine ausführlichere Beschreibung steht in der Veröffentlichung "Namiki et al., Proc. OAA 2000, Quebec, OMB 2, 7-9". Beim Multiplexen von wenigen Pumpwellenlängen können auch Interferenzfilter verwendet werden. Hierbei können auch nicht-äquidistante Abstände der Pumpwellenlängen realisiert werden. Die in derartige Multiplexer eingekoppelte Leistung ist aber kleiner als bei Mach-Zender-Interferometern. In der Veröffentlichung "Kidorf et al., IEEE Phot. Technol. Lett., 11 (1999), 530-532" wird eine nicht-äquidistante Verteilung der Pumpwellenlängen beschrieben, bei der eine größere Konzentration der kleineren Pumpwellenlängen im Vergleich zu größeren Pumpwellenlängen vorgesehen ist. Dadurch wird ein entsprechender Leistungstransfer von kleinen zu größeren Pumpwellenlängen durch Raman Wechselwirkung entlang der Faser ausgeglichen.

Bei Verwendung von äquidistanten Pumpwellenlängen für eine Signalübertragung im C- und L- Band (d.h. Pumpwellenlängen zwischen etwa 1420 nm und 1510 nm und Signalwellenlängen zwischen ca. 1525 nm und 1610 nm) tritt zwischen den Pumpwellenlängen Vierwellenmischung oder Four Wave Mixing FWM in bestimmten Fasertypen vor allem bei hohen Leistungen und/oder bei niedriger Dispersion im Bereich der Pumpwellenlängen auf. Eine ausführliche Beschreibung der Vierwellenmischung ist in "Agrawal, Nonlinear Fiber Optics, 1995, p. 404 gegeben. Diese entsteht besonders dann, wenn spektrale Anteile der Pumpsignale in der Nähe des Nulldurchgangs der Dispersion, z. B. bei 1510 nm, der Verstärkerfaser liegen. Dadurch werden neue Frequenzkomponenten oder sogenannte Mischprodukte bei Summen oder Differenzen von Pumpfrequenzen erzeugt, die sich in oder ausserhalb des Spektrums der Pumpquelle überlagern. Damit können sich ebenfalls die Mischprodukte direkt bei kodirektionalem Pumpen in die Verstärkerfaser dem WDM-Signalsspektrum überlagern und stören, falls die höheren Pumpwellenlängen nahe an den kleineren Signalwellenlängen sind. Die Signalqualität, z. B. die Signal-Rauschabstände OSNR bestimmter Kanäle des WDM-Signals, wird dadurch verschlechtert.
Auch bei kontradirektionalem Pumpen in die Verstärkerfaser, d. h. wenn Pumpkanäle und die zu verstärkenden Signalkanäle in der Verstärkerfaser sich in entgegengesetzte Richtung ausbreiten, können die Mischprodukte Störungen verursachen. Durch Rayleighstreuung werden nämlich die zunächst in Gegenrichtung zu den Signalkanälen entstehenden Mischprodukte reflektiert. Die reflektierten Anteile breiten sich dann in der selben Richtung aus wie die Signalkanäle. Auf diese Weise können spektrale Komponenten entstehen, die sich Signalkanälen überlagern. Da die Mischprodukte ebenfalls selber durch stimulierte Raman-Streuung verstärkt werden, kann ihre Amplitude derart steigen, daß die Übertragung stark beeinträchtigt wird.

Bisherige Verfahren zur Reduzierung der Vierwellenmischung, insbesondere zwischen Pumpsignalen, verwenden eine nicht-äquidistante Anordnung der Pumpwellenlängen, damit die reduzierten Mischprodukte außerhalb der Bereichen der Pump- bzw. der Signalwellenlängen liegen. In "Comparisons of Four-Wave Mixing Suppression Techniques in Multichannel Coherent WDM Systems", Bohyeon Hwang, Information und Communication Division, Samsung SDS Co. Ltd., APCC 1997, Seite 648-652 ist diese Technik erläutert.
Der Einsatz einer Verstärkerfaser mit hoher Dispersion ermöglicht auch eine Unterdrückung der Mischprodukte aus den Pumpsignalen. Eine hohe Dispersion ist jedoch nicht immer für die Signalkanäle erwünscht.
Durch Einbringen von Laufzeitdifferenzen zwischen den Kanälen mit Aufteilung der Kanäle und mit dem Einsatz von von Kanal zu Kanal unterschiedliche Längen aufweisenden Verzögerungsleitungen werden auch Mischprodukte unterdrückt. Dies ist aber bei einer Erweiterung des WDM-Übertragungssystems nur aufwendig zu realisieren.
Aus der deutschen Patentanmeldung DE 10111491.5 ist auch eine Pumpquelle mit jeweils mehreren Pumplasern zur Raman-Verstärkung eines WDM-Signals mit minimierter Vierwellenmischung bekannt. Dabei werden die Pumpwellenlängen derart gewählt, daß Mischprodukte im Spektrum eines übertragenen WDM-Signals minimiert oder entfernt werden. Dadurch ergeben sich definierte Übertragungsbänder des WDM-Signals im C- und L-Band mit dazwischen Mischprodukten, die somit die Übertragung in den Übertragungsbänder nicht beeinträchtigen.

Aus WO 01/22627 A1 sind ebenfalls eine Anordnung und ein Verfahren zur Reduzierung von Vierwellenmischung bei der Übertragung eines Non-Return-to-Zero(-NRZ)-WDM-Signals bekannt. Die Phase der Kanäle wird periodisch von Kanal zu Kanal derart moduliert, daß Mischprodukte durch Vierwellenmischung zwischen den Signalkanälen am Sender des Übertragungssystems unterdrückt werden. Es werden jedoch keine Hinweise über Mischprodukte gegeben, die die Übertragungseigenschaften aus Pumpquellen bis zur Einkopplung in die Übertragungsfaser beeinträchtigen.

Die Aufgabe der Erfindung besteht also darin, den Einfluss der aus einer breitbandigen Pumpquelle aufgrund einer Vierwellenmischung erzeugten Mischprodukte zu eliminieren oder mindestens stark zu minimieren.

Erfindungsgemäß wird diese Aufgabe durch eine Pumpquelle gemäß den Merkmalen des Anspruchs 1 gelöst.

Zweckmäßige Weiterbildungen der Erfindung werden in den abhängigen Ansprüchen beschrieben.

Die Pumpquelle weist mehrere Pumplaser auf, die Pumpsignale mit unterschiedlichen Pumpwellenlängen erzeugen. Diese Pumpsignale werden zur Raman-Verstärkung eines über eine Faser übertragenen Wellenlängen-Multiplex-(WDM-)Signals in die Faser mittels einer Einkoppeleinrichtung eingespeist. Erfindungsgemäß sind Module zur Winkel- und/oder Amplitudenmodulation der Pumpsignale an einige oder an alle Pumplaser angeschlossen.

Die Amplituden der Injektionsströme der Pumplaser werden durch die Module derart moduliert, daß Mischprodukte aus Wellenmischungen zwischen den Pumpsignalen bzw. durch Vierwellenmischung vorteilhaft unterdrückt werden. Nicht mehr vorhandene oder mindestens reduzierte Mischprodukte aus der Pumpquelle werden daher die Übertragung des WDM-Signals nicht oder wesentlich weniger beeinträchtigen.

Frequenzmäßig benachbarte Pumpsignale weisen bei Winkelmodulation in vorteilhafter Weise unterschiedliche Phasenlage mit gleicher Modulationsfrequenz zur Reduzierung der Mischprodukte auf.

Zur erfindungsgemäßen Unterdrückung der Mischprodukte zwischen Pumpsignalen wird eine entsprechende Modulationsfrequenz bzw. ein maximaler Modulationshub so gewählt, daß bei kontradirektionalem Pumpen in die Faser die Modulation der Pumpsignale zu keiner störenden Modulation der Kanälen des WDM-Signals führt.

Einige Varianten der erfindungsgemäßen Pumpquelle sind außerdem durch unterschiedliche Anordnung der Module zur Winkelund/oder Amplitudenmodulation realisierbar. Die Winkel- bzw. Amplitudenmodulation läßt sich entweder durch entsprechende Einstellung der Injektionsströme der Pumplaser oder durch optische Modulatoren realisieren.

Ein Ausführungsbeispiel der Erfindung wird anhand der Zeichnung näher beschrieben. Dabei zeigen:
- Figur 1:: die erfindungsgemäße Pumpquelle mit Winkelmodulation der Pumpsignale,
- Figur 2:: die erfindungsgemäße Pumpquelle mit Amplitudenmodulation der Pumpsignale,
- Figur 3:: eine zweite Realisierung der erfindungsgemäßen Pumpquelle mit Amplitudenmodulation der Pumpsignale,
- Figur 4:: eine vereinfachte Pumpquelle bei periodischer Winkel- bzw- Amplitudenmodulation der Pumpsignale.

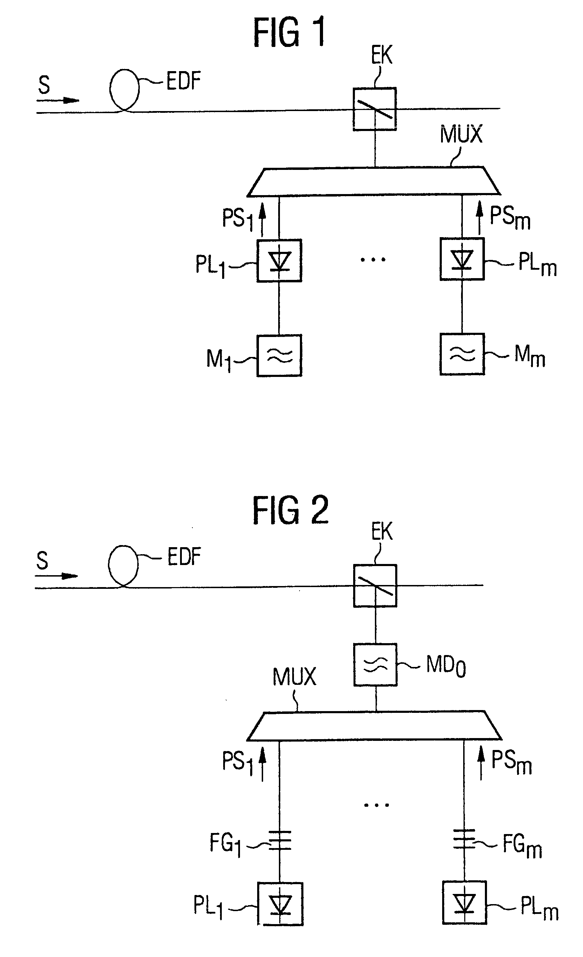

Die **Figur 1** zeigt eine erfindungsgemäße Pumpquelle, die mehrere mit unterschiedlichen Pumpwellenlängen λ₁, ..., λₘ (m>0) betriebene Pumplaser PL₁, ..., PLₘ zur Raman-Verstärkung eines über eine Faser EDF übertragenen Wellenlängen-Multiplex-(WDM-)Signals S aufweist. Ein Multiplexer MUX faßt alle von jeweiligen Pumplasern PL₁, ..., PLₘ ausgehenden Pumpsignale PS₁, ..., PSₘ zusammen. Die zusammengefassten Pumpsignale werden in die Faser EDF mittels einer Einkoppeleinrichtung EK kontradirektional eingespeist. Verschiedene Varianten von Einkoppeleinrichtungen wie auch zum kodirektionalen Pumpen sind realisierbar, werden jedoch bei der vorliegenden Anmeldung nicht weiter erläutert.
An allen oder wenigstens einigen der Pumplaser PL₁, ..., PLₘ werden Module M₁, ..., Mₘ zur Phasen- bzw. Frequenzmodulation der entsprechenden Pumpsignale PS₁, ..., PSₘ angeschlossen. Diese Modulation wird im folgenden als Winkelmodulation bezeichnet.
Eine Amplitudenmodulation der Pumpsignale PS₁, ..., PSₘ ist ebenfalls möglich. In dem Fall werden frequenzmäßig benachbarte Pumpsignale mit unterschiedlichen Amplituden moduliert. Beispielweise kann eine periodische Modulation der Amplituden zwischen zwei benachbarten Pumpsignalen ..., PSᵢ, PSᵢ₊₁, ... mit 0 und 1 (Vollaussteuerung) verwendet werden. Da eine Wellenmischung meistens zwischen benachbarten Pumpkanälen stattfindet, werden mindestens die Mischprodukte zweier aufeinanderfolgender Pumpsignale unterdrückt.
Die verwendeten Module M₁, ..., Mₘ weisen eine geringe Einfügedämpfung zur Vermeidung von Pumpverlusten auf.

Als Pumplasern PL₁, ..., PLₘ werden bei diesem Ausführungsbeispiel Halbleiter-Laserdioden verwendet. Dadurch wird in vorteilhafter Weise die Winkelmodulation der Pumpsignale PS₁, ..., PSₘ durch eine geringe Amplitudenmodulation von Injektionsströmen I₁, ..., Iₘ der Pumplaser PL₁, ..., PLₘ ermöglicht.
Im Hinblick auf die Amplitude der Vierwellenmischung gilt, daß diese um so kleiner ausfällt, je höher die Modulationsfrequenz ist. Deshalb wird eine entsprechend möglichst maximale Modulationsfrequenz gewählt, bis zu der bei einer kontradirektionalen Einkopplung der Pumpsignale noch Frequenzanteilssignale der Pumpsignale PS₁, ..., PSₘ zu den Kanälen des WDM-Signals, d.h. ohne störender Modulation der Kanäle des WDM-Signals, optimal überkoppeln und anderseits, daß die Modulationsfrequenz kleiner als die Relaxationsfrequenzen der Pumplaser PL₁, ..., PLₘ bleibt.
Ebenfalls wird ein großer Modulationshub gewählt, damit sich Mischprodukte aus Vierwellenmischung FWM über einen breiten spektralen Bereich verteilen. Dadurch sinkt die Leistungsdichte pro Wellenlängenbereich und damit die Störleistung innerhalb der Bandbreite des WDM-Signals S.

Mischprodukte entstehen nur bei einer gemeinsamen Ausbreitung von Signalen entlang einer Faser. Deshalb werden die Pumpsignale PS₁, ..., PSₘ gleich am Ausgang der Pumplaser PL₁, ..., PLₘ winkel- oder amplitudenmoduliert. Dadurch werden Mischprodukte der Pumpsignale PS₁, ..., PSₘ vor ihrer Einkopplung in die Faser EDF und weiterhin bei der Ausbreitung in der Faser EDF unterdrückt.

Da die Vierwellenmischung ein phasenabhängiger Effekt zwischen Kanälen ist, kann die Amplitude der Mischprodukte durch eine vorteilhafte Wahl einer Phasenbeziehung zwischen den Kanälen gesenkt werden. Eine von Kanal zu Kanal unterschiedliche oder abwechselnde, z. B. periodische nach Schemata S1=(+π, -π, +π, -π, ...) oder S2=(+π, 0, -π, 0...), Phasenlage φ₁, ..., φₘ der Pumpsignale PS₁, ..., PSₘ ist bei gleicher Modulationsfrequenz für eine Winkelmodulation einfach einstellbar. Für das Schema S1 springt die Phasenlage φ₁, ..., φₘ von Pumplaser zu Pumplaser um 180°, für das zweite Schema S2 liegt zwischen zwei gegenphasigen modulierten Pumpsignalen ein unmoduliertes Pumpsignal. Die Phasenlage der Pumpsignale PS₁, ..., PSₘ ist durch die Module M₁, ..., Mₘ steuerbar, kann jedoch auch durch unterschiedliche Längen von Fasern nach den Pumplasern PL₁, ..., PLₘ vor der Einkopplung in die Faser EDF erreicht werden.
Die erfindungsgemäße Pumpquelle wurde mit 7 Pumplasern PL₁, ..., PL₇ realisiert, deren Injektionsströme I₁, ..., I₇ eine Modulationsfrequenz von 10 MHz, einen Modulationsindex von ca. 10% und eine Phasendifferenz von Kanal zu Kanal von 180° aufweisen.

In **Fig. 2** ist eine erfindungsgemäße Pumpquelle zur Amplitudenmodulation der Pumpsignale PS₁, ..., PSₘ dargestellt. Im Vergleich zur Pumpquelle in Fig.1 ist anstelle der Module M₁, ..., Mₘ ein optischer Modulator MD₀ zwischen dem Multiplexer MUX und der Einkoppeleinrichtung EK eingeschaltet und moduliert derart die Amplitude jeder Pumpsignale PS₁, ..., PSₘ, daß Mischprodukte unterdrückt werden, dadurch daß Wellenlängen-benachbarte Pumplaser möglichst nie gleichzeitig angeschaltet werden. Anstelle des optischen Modulators MD₀ kann bei Einsatz der Module M₁, ..., Mₘ die Amplitudenmodulation der Pumpsignale PS₁, ..., PSₘ ebenso mittels der Modulation der Injektionsströme eingesetzter Module M₁, ..., Mₘ wie in Fig. 1 realisiert werden. Zusätzlich sind am Ausgang der Pumplaser PL₁, ..., PLₘ Fasergitter FG₁, ..., FGₘ zur Stabilisierung der Pumpwellenlängen λ₁, ..., λₘ angeordnet.
Bei Winkelmodulation, wie in Fig. 1, können an die Pumplaser PL₁, ..., PLₘ ebenfalls die Fasergitter FG₁, ..., FGₘ angeschlossen werden.

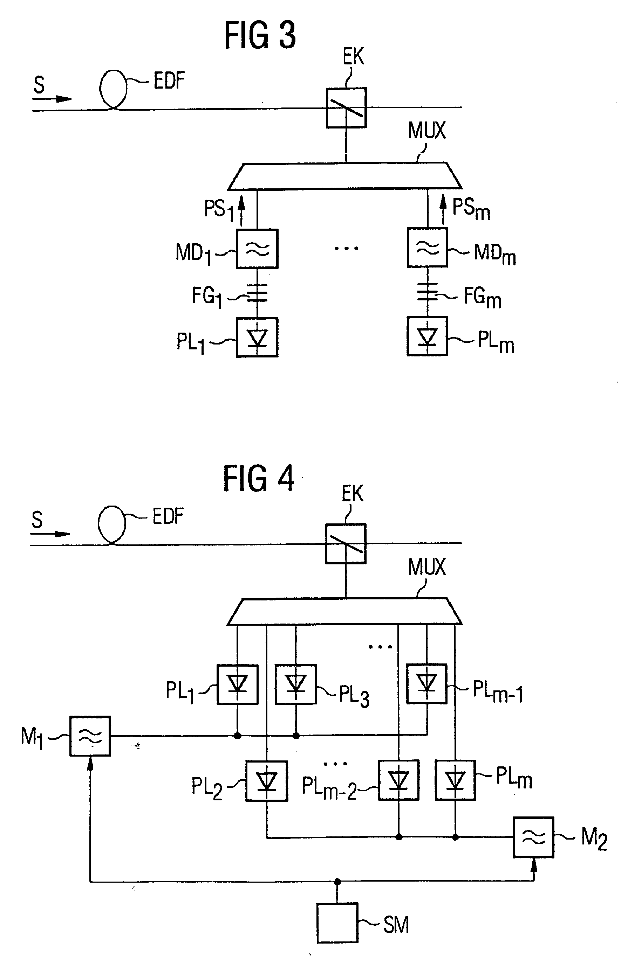

Fig. 3 zeigt eine Variante der in Fig. 2 dargestellten Pumpquelle bei Amplitudenmodulation der Pumpsignale PS₁, ..., PSₘ. Der optische Modulator MD₀ wird durch mehrere optische Einkanal-Modulatoren MD₁, ..., MDₘ ersetzt und die Einkanal-Modulatoren MD₁, ..., MDₘ werden zwischen dem Multiplexer MUX und den Pumplasern PL₁, ..., PLₘ eingeschaltet. Ebenfalls werden die Fasergitter FG₁, ..., FGₘ den Ausgängen der Pumplaser PL₁, ..., PLₘ nachgeschaltet.

**Fig. 4** zeigt eine Vereinfachung für die Realisierung der erfindungsgemäßen Pumpquelle mit angeordneten Modulen M₁, ..., Mₘ bzw. Modulatoren MD₁, ..., MDₘ bei optischer Winkel- oder Amplitudenmodulation der Pumpsignale anstelle einer Amplitudenmodulation der Injektionsströme der Pumplaser. Bei einer periodischen Winkel- und/oder Amplitudenmodulation der Pumpsignale PS₁, ..., PSₘ reduziert sich der Zahl der verwendeten Module M₁, ..., Mₘ bzw. Modulatoren MD₁, ..., MDₘ auf die Zahl der über eine Periode aufeinanderfolgenden modulierten Pumpsignalen. Beispielweise für eine periodische Phasenlage nach dem Schema S1=(+π, -π, +π, -π, ...) wird ein erstes Modul M₁ den Pumplasern PL₁, PL₃, ..., PLₘ₋₁ und ein zweites Modul M₂ den Pumplasern PL₂, PL₄, ..., PLₘ vorgeschaltet. Ein Steuermodul SM ist an die Module M1,M2 angeschlossen, damit zwei aufeinanderfolgende Pumpsignale die Phasenlage +π oder -π gleichzeitig aufweisen. Vorteilhaft werden hierdurch nur zwei Module M₁, M₂ verwendet.

## Patentansprüche

1. Pumpquelle mit mehreren Pumplasern (PL₁, ..., PLₘ), die Pumpsignale (PS₁, ..., PSₘ) mit unterschiedlichen Pumpwellenlängen (λ₁, ..., λₘ) erzeugen, die zur Raman-Verstärkung eines über eine Faser (EDF) übertragenen Wellenlängen-Multiplex-(WDM-)Signals (S) in die Faser (EDF) mittels einer Einkoppeleinrichtung (EK) eingespeist sind,
**dadurch gekennzeichnet,**
**dass** an einige oder an alle Pumplaser (PL₁, ..., PLₘ) Module (M₁, ..., Mₘ) zur Winkel- oder Amplitudenmodulation der Pumpsignale (PS₁, ..., PSₘ) angeschlossen sind.

2. Pumpquelle nach Anspruch 1,
**dadurch gekennzeichnet,**
**dass** Injektionsströme (I₁, ...,Iₘ) der Pumplaser (PL₁, ..., PLₘ) durch die Module (M₁, ..., Mₘ) zur Winkelund/oder Amplitudenmodulation der Pumpsignale (PS₁, ..., PSₘ) amplitudenmoduliert sind.

3. Pumpquelle nach Anspruch 1 oder 2,
**dadurch gekennzeichnet,**
**dass** frequenzmäßig benachbarte Pumpsignale (PS₁, ..., PSₘ) bei Winkelmodulation gleiche Modulationsfrequenz und unterschiedliche Phasenlage (φ₁, ..., φₘ) oder bei Amplitudenmodulation unterschiedliche Amplituden derart aufweisen, daß Mischprodukte der Pumpsignale (PS₁, ..., PSₘ) vor ihrer Einkopplung in die Faser (EDF) sowie bei Ausbreitung in der Faser (EDF) unterdrückt werden.

4. Pumpquelle nach Anspruch 1, 2 oder 3,
**dadurch gekennzeichnet,**
**dass** bei kontradirektionalen Pumpsignalen die Modulationsfrequenz der Pumpsignale (PS₁, ..., PSₘ) kleiner ist als eine Grenzfrequenz.

5. Pumpquelle nach einem der vorhergehenden Ansprüche,
**dadurch gekennzeichnet,**
**dass** die Pumpsignale (PS₁, ..., PSₘ) linear winkelmoduliert sind.

6. Pumpquelle nach einem der vorhergehenden Ansprüche,
**dadurch gekennzeichnet,**
**dass** den Pumplasern (PL₁, ..., PLₘ) Fasergitter (FG₁, ..., FGₘ) zur Stabilisierung der Pumpwellenlängen (λ₁, ..., λₘ) nachgeschaltet sind und
**daß** zwischen einem die Pumpsignale (PS₁, ..., PSₘ) zusammenfassenden Multiplexer (MUX) und der Einkoppeleinrichtung (EK) ein Modulator (MD₀) eingeschaltet ist
oder zwischen den Fasergittern (FG₁, ..., FGₘ) und dem Multiplexer (MUX) Modulatoren (MD₁, ..., MDₘ) eingeschaltet sind.

7. Pumpquelle nach einem der vorhergehenden Ansprüche,
**dadurch gekennzeichnet,**
**dass** Module (M₁, ..., Mₙ) oder Modulatoren (MD₁, ..., MDₘ) für mehrere Pumplaser (PL₁, ..., PLₘ) mit m ≥ n gemeinsam von einem Steuermodul (SM) gesteuert werden.
